# EUROPEAN PATENT APPLICATION

(11) **EP 1 624 652 A1**
(43) Date of publication of application: **08.02.2006**
(21) Application number: 05405437.4
(22) Date of filing: 14.07.2005
(51) Int. Cl.: H04M 1/05

(54) **Mobile telephone apparatus with means for hanging it on user's ear**

(30) Priority: 06.08.2004 CH 13082004
(71) Applicant: Cedro, Alfonso, 4054 Basilea (CH)
(72) Inventor: Cedro, Alfonso, 4054 Basilea (CH)
(74) Representative: Fiammenghi-Domenighetti, Delfina

(57) **Abstract**

A pocket-size mobile telephone apparatus (1) is described, said apparatus being used by arranging its casing (10) next to the ear (7) of the user and being provided with connecting means (9) designed to connect it, while supporting it, to the top part (6s) of the base (6) of the said user's ear (7).

## Description

The present invention relates to the sector of mobile telephone apparatus commonly known as "cellular phones".

As is known, one of the main problems when using these apparatus is that, in order to be used, they must be held in one hand by the user, thus limiting the operating possibilities of the latter and distracting his/her attention.

In order to overcome this drawback when driving a car, so-called "handsfree" kits have been developed, which kits are connected to the apparatus, receive the acoustic signal from it and retransmit the signal, amplifying it by means of loudspeakers.

These kits, which among other things are fairly costly, are useful only when driving a car and cannot be used in all other daily living situations.

In order to solve the abovementioned problem in such situations, earphones have been developed, these consisting of a receiver and microphone and being connected by means of wires or via radio to the cellular phone which is usually kept inside a pocket or inside another container attached to the user's body.

The abovementioned earphones have the disadvantage that, when they are provided with connecting wires, the latter hamper the user and are aesthetically unattractive or, when they operate via radio, they have a purchase cost which is even greater than the cost of buying the mobile telephone apparatus with which they are used.

In order to overcome all the problems and drawbacks described hitherto, the inventor of the subject of the present application has devised a mobile telephone apparatus which may be suspended from the user's ear by means of an ear clip which is connected in various ways - illustrated below - to the casing of the apparatus. This clip may moreover be provided with resilient means which oppose the rotation thereof necessary for inserting it around the base of the user's ear, with the consequent advantage of gripping lightly the ear between the said clip and the said casing of the apparatus, keeping the latter securely attached for the entire duration of a telephone call.

When the telephone call has ended and the apparatus is detached from the ear, the abovementioned resilient means bring the ear clip back into its initial position, against the casing or even housed inside special recesses formed therein.

The present invention therefore relates to a mobile telephone apparatus as described in the accompanying Claim 1. A more detailed description of two preferred examples of embodiment of the apparatus according to the invention will now be provided, in which, respectively, the already mentioned means for connection to the user's ear are stably fixed to the casing of the apparatus or are attached thereto in a reversible manner.

During the course of the abovementioned description, reference will also be made to the accompanying drawings in which:
- Figure 1 is a perspective view of the first of the said examples of embodiment of an apparatus according to the invention;
- Figure 2 is a perspective view of the apparatus according to Figure 1 applied to the base of a user's ear;
- Figure 3 is a perspective view of the second of the said examples of the apparatus according to the invention, in which the connecting and suspension means are applied in a reversible manner;
- Figure 4 is an enlarged longitudinal section through the zone where an arm forming the terminal part of the ear clip used for suspension is fixed;
- Figure 5 is a perspective view of the apparatus of Figure 4, while its suspension clip is moved away from the casing before the apparatus is mounted onto the base of a user's ear;
- Figure 6 is a different enlarged perspective view of the apparatus according to Figure 5 where the user's hand has not been shown so that all the details of the apparatus are visible;
- Figure 7 is an enlarged perspective view of the apparatus according to Figure 5, mounted on the base of a user's ear.

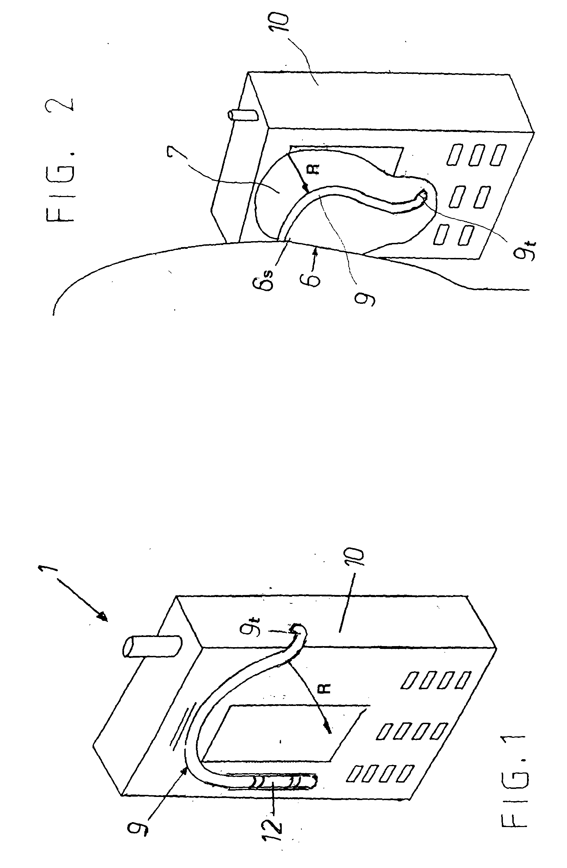

Let us consider first of all Figures 1, 2; in them it can be seen how a pocket-size mobile telephone apparatus 1 according to the present invention is provided with connecting means designed to connect it, suspending it as shown in Figure 2, to the top part 6s of the base 6 of a user's ear 7.

The said connecting means essentially consist of an ear clip 9 terminating on one side in an arm 12 hingeably mounted on the casing 10 of the apparatus 1 using known systems so as to be able to rotate relative thereto.

The free end 9t of the said clip 9 is shaped and has dimensions such that it projects from the profile of the said casing 10, so as to be able to exert easily thereon a force which causes rotation of the clip 9 (arrow R) so as to separate it from the said casing 10.

By acting in this way, a free space is created between the clip 9 and the casing 10, allowing this clip 9 to be applied onto the top part 6s of the base 6 of the ear 7, with the latter arranged between the clip 9 itself and the said casing 10. The apparatus 1 is thus "hung" from the said base 6 and allows the user to hear clearly what is being transmitted by the apparatus 1 without having to hold it with one hand.

Advantageously, resilient means of the type known for similar applications may be applied between the said arm 12 and the casing 10, these means opposing resiliently the abovementioned rotation R. The ear 7 may thus be lightly gripped between the clip 9 and the casing 10 of the apparatus, thus keeping the latter correctly and reliably positioned even when the user must perform movements with the head.

One possible design of the abovementioned resilient means will be illustrated in the description below in relation to a second example of embodiment.

The example of embodiment described hitherto is particularly suitable for application in the construction of new apparatus designed in accordance with the invention, but also already existing apparatus may be modified in order to obtain the same results and advantages.

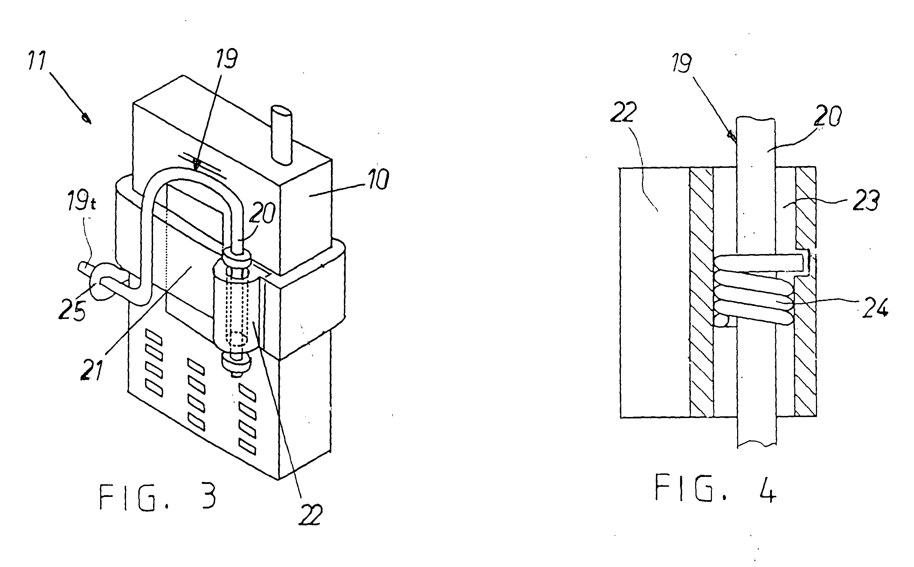

If we consider in fact Figures 3 to 7, in them it can be seen how an apparatus 11 has been fitted in an easily reversible manner with connecting means designed to connect it, while supporting it, to the base of a user's ear as already described for the previous example.

In the abovementioned Figures 3 to 7 it can in fact be seen how these reversible connecting means essentially consist of an ear clip 19, similar to that described above, also terminating at one end in a straight arm 20. This arm 20, however, is not hinged in a zone of the casing 10 of the apparatus 11, but inside a cavity 23 formed in a rigid support 22 fixed onto a ring 21 of transparent elastic material with dimensions such that it may be applied transversely onto the casing 10 of the apparatus 11, adhering thereto elastically.

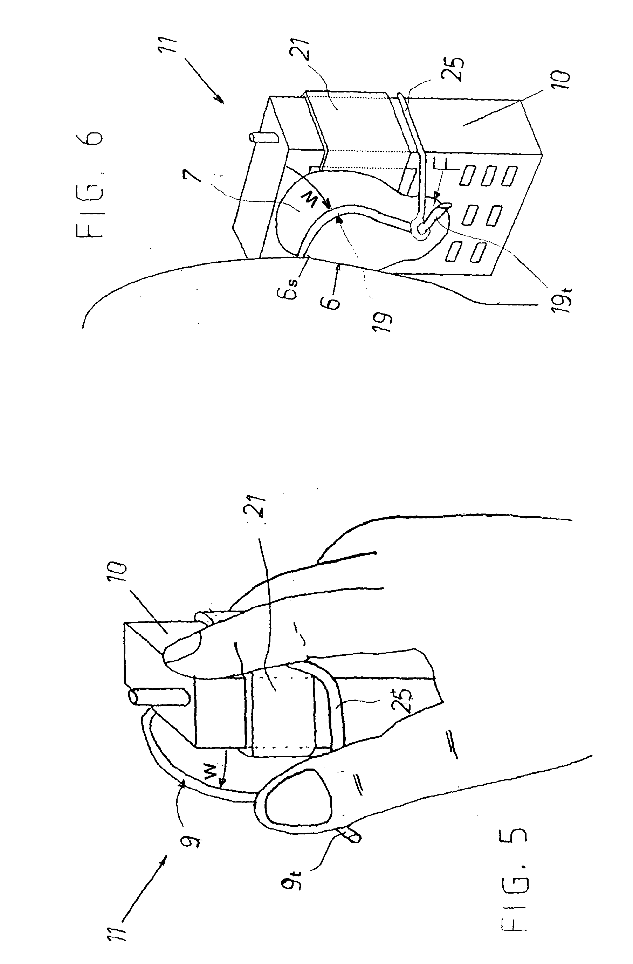

In this case also the free end 19t of the clip 19 is formed so as to project from the profile of the casing 10 so that it may be easily moved, causing the said clip 19 to perform a rotation (arrow W) for the purposes already explained in the previous example. Resilient means, for example a torsion spring 24 of the known type, may be advantageously arranged, with the aim already described, between the arm 20 and the said cavity 23 of the rigid support 22 which houses it (Figure 4). Another constructional possibility consists in applying a flexible elastic cord 25, which is wound around part of the casing 10, being connected at one end onto the elastic ring 21 and at the other end onto the free end 19t of the clip 19. In some cases it may be advisable to use both the solutions suitably combined with each other.

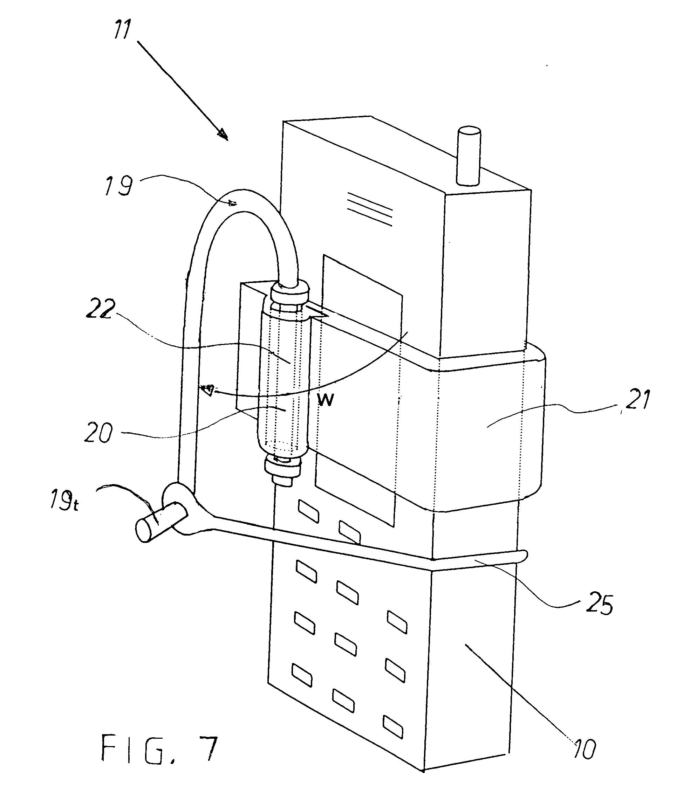

In this case also, the apparatus 11, after its ear clip 19 has been rotated (arrows W) as shown in Figures 5, 6, may be mounted on the top part 6s of the base 6 of the user's ear 7, as shown in Figure 7, with the ear 7 itself being lightly gripped between the clip 19 and the casing 10 of the apparatus 11.

In both cases described the result of allowing use of a mobile telephone apparatus without having to support it with one hand is achieved in a simple and low-cost manner.

It is obvious that the systems described hitherto may be used, with the appropriate changes, for apparatus different from that shown in the drawings, for example apparatus of the fold-up type.

## Claims

1. Pocket-size mobile telephone apparatus (1, 11) which is used by arranging its casing (10) next to the user's ear (7), **characterized in that** it may be provided with connecting means (9, 12, 19, 21, 22, 23) able to connect it, while supporting it, to the top part (6s) of the base (6) of the said user's ear (7).

2. Apparatus according to Claim 1, in which the said connecting means consist of an ear clip (9, 19) terminating on one side in an arm (12, 20) hinged on the casing (10) of the said apparatus (1, 11) so as to be able to rotate with respect thereto.

3. Apparatus according to Claim 2, in which means which resiliently oppose a rotation (R, W) of the arm (12, 20) with respect to the casing (10) are applied between the abovementioned arm (12, 20) and the said casing (10).

4. Apparatus according to Claim 1, in which the said connecting means (21, 22, 23) are able to be secured in a reversible manner on the casing (10) of the said apparatus (11).

5. Apparatus according to Claim 4, in which the said reversible connecting means consist of:
a) an ear clip (19) terminating at one end in a straight arm (20);
b) a ring (21) of transparent elastic material having dimensions such that it can be applied transversely around the casing (10) of the apparatus (11), adhering thereto elastically;
c) a rigid support (22) fixed onto the said ring (21) and having a cavity (23) able to contain at least the terminal part of the abovementioned straight arm (20), allowing it to rotate;
d) resilient means (24) which oppose rotation (W) of the said arm (20), causing a movement of the clip (19) of the casing (10) away from the said apparatus (11).

6. Apparatus according to Claim 5, in which the said resilient means which oppose a rotation of the arm (20) consist of a torsion spring (24) inserted inside the said cavity (23) of the abovementioned ring (21) and arranged coaxially between the arm (20) and the said cavity (23).

7. Apparatus according to Claim 5, in which the said resilient means which oppose a rotation of the arm (20) consist of an elastic and flexible cord (25) which is wound around part of the casing and is connected to the said ring (21) and to the free end (19t) of the ear clip (19).

8. Apparatus according to one of the preceding claims, in which the free end of the said ear clip (9, 19) has a portion (9t, 19t) formed and with dimensions such as to project from the profile of the casing (10) of the said apparatus (1, 11).
